(19) Europäisches Patentamt / European Patent Office / Office européen des brevets

(11) **EP 1 843 868 B1**

(12) **EUROPÄISCHE PATENTSCHRIFT**

(45) Veröffentlichungstag und Bekanntmachung des Hinweises auf die Patenterteilung:
**27.07.2011 Patentblatt 2011/30**

(21) Anmeldenummer: **05796051.0**

(22) Anmeldetag: **24.09.2005**

(51) Int Cl.:
*B22F 1/00* (2006.01)    *C22C 1/04* (2006.01)
*H01G 9/042* (2006.01)

(86) Internationale Anmeldenummer:
**PCT/EP2005/010361**

(87) Internationale Veröffentlichungsnummer:
**WO 2006/037497 (13.04.2006 Gazette 2006/15)**

(54) **TANTALPULVER ZUR HERSTELLUNG VON FESTELEKTROLYTKONDENSATOREN**

TANTALUM POWDER FOR THE PRODUCTION OF SOLID ELECTROLYTE CAPACITORS

POUDRE DE TANTALE POUR PRODUIRE DES CONDENSATEURS A ELECTROLYTE SOLIDE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **08.10.2004 DE 102004049040**

(43) Veröffentlichungstag der Anmeldung:
**17.10.2007 Patentblatt 2007/42**

(73) Patentinhaber: **H.C. Starck GmbH**
**38642 Goslar (DE)**

(72) Erfinder:
• **HAAS, Helmut**
**38312 Achim (DE)**
• **BARTMANN, Ulrich**
**38640 Goslar (DE)**

(74) Vertreter: **Clauswitz, Kai-Uwe Wolfram**
**H.C. Starck GmbH**
**Patentabteilung**
**Im Schleeke 78-91**
**38642 Goslar (DE)**

(56) Entgegenhaltungen:
**US-A- 5 986 877    US-A1- 2003 230 167**
**US-B1- 6 238 456**

**Beschreibung**

Die vorliegende Erfindung betrifft die Herstellung von Festelektrolytkondensatoren auf Basis Tantal, insbesondere solche mit hoher spezifischer Kapazität von oberhalb 70.000 μFV/g.

Als Festelektrolytkondensatoren mit sehr großer aktiver Kondensatorfläche und daher kleiner, für die mobile Kommunikationselektronik geeigneter Bauweise werden überwiegend solche mit einer auf einem entsprechenden leitfähigen Tantalmetallträger aufgebrachten Tantalpentoxidsperrschicht eingesetzt unter Nutzung von deren Stabilität ("Ventilmetall"), der vergleichsweise hohen Dielektrizitätskonstanten und der über die elektrochemische Erzeugung mit sehr gleichmäßiger Schichtdicke herstellbare isolierende Pentoxidschicht. Der metallische Träger, der zugleich die eine Kondensatorelektrode (Anode) darstellt, besteht aus einer hochporösen, schwammartigen Struktur, die durch Pressen und Versintern feinstteiliger Primärstrukturen bzw. bereits schwammartiger Sekundärstrukturen hergestellt wird. Dabei ist die Stabilität der Presskörper wesentlich für die weitere Verarbeitung zum Sinterkörper, der eigentlichen Trägerstruktur bzw. Anode des Kondensators. Die Oberfläche der Trägerstruktur wird elektrolytisch zum Pentoxid oxidiert ("formiert"), wobei die Dicke der Pentoxidschicht durch die Maximalspannung der elektrolytischen Oxidation ("Formierspannung") bestimmt wird. Die Gegenelektrode wird durch Tränken der schwammartigen Struktur mit Mangannitrat, das thermisch zu Mangandioxid umgesetzt wird oder mit einem flüssigen Vorläufer eines Polymerelektrolyten und Polymerisation erzeugt. Die elektrischen Kontakte zu den Elektroden werden auf der einen Seite durch einen vor dem Sintern in die Pressform eingelegten Tantal- oder Niobdraht und auf der anderen Seite durch die gegen den Draht isolierte metallische Kondensatorhülle dargestellt. Die Festigkeit, mit der der Draht mit der Anodenstruktur versintert ist, ist eine weitere wesentliche Eigenschaft für die weitere Verarbeitung zum Kondensator.

Die Kapazität C eines Kondensators berechnet sich nach folgender Formel:

$$C = (F \cdot \varepsilon) / d$$

wobei F die Kondensatoroberfläche, ε die Dielektrizitätskonstante, d die Dicke der Isolatorschicht bezeichnet.

Die Qualität von derartigen Festelektrolytkondensatoren hängt wesentlich von der Ausbildung der schwammartigen Anodenstruktur, insbesondere der Verästelung der offenen Porenstrukturen von größeren hin zu feinsten Poren ab. Die Schwammartige Struktur muss einerseits nach Ausbildung der Isolatorschicht, die zu einem Drittel in die ursprünglichen Anodenstruktur hereinwächst und zu zwei Dritteln auf diese aufwächst, noch eine geschlossene elektrisch leitfähige Struktur darstellen und andererseits eine zusammenhängende offene Porenstruktur übrig lassen, damit die darin gebildete Kathode die Isolationsschichtoberfläche vollständig kontaktieren kann.

Die Entwicklung der letzten Jahre hat zur Anwendung immer feinteiligerer Primärpulvern geführt, insbesondere weil die moderne Kommunikationselektronik bei niedrigerer Spannung arbeitet. Die dadurch mögliche geringere Isolationsschichtdicke ermöglicht es, bei feinerer Primärstrukturabmessung noch eine geschlossene Anodenstruktur und nach Anodisierung noch eine zusammenhängende Porenstruktur darzustellen.

Kondensatoren aus Tantalpulver sind z.B. bekannt aus US 5 986 877.

Die schwammartige Anodenstruktur wird dabei von feinteiligen Primär- und Sekundärstrukturen ausgehend durch eine in der Regel mehrstufige Erzeugung von Pulveragglomeraten, sowie Pressen und Sintern der Agglomerate erzeugt, wobei ein zu starkes Versintern durch Einsatz von Sinterschutzdotierungen mit Stickstoff und/oder Phosphor, früher auch Bor, Silizium, Schwefel, Arsen, verhindert wird. Der dabei teilweise zu stark reduzierten Sinteraktivität für die Zwecke der Agglomeration wurde durch gleichzeitige Reduktion (desoxidierende Agglomeration") entgegengewirkt, indem durch die gleichzeitig ablaufende Desoxidationsreaktion eine erhöhte oberflächliche Atombeweglichkeit erzeugt wurde.

Die wirtschaftliche Herstellung von Tantalkondensatoren erfordert also eine Vielzahl von Kompromissen, um sowohl Zwischenstufen mit günstigen Weiterverarbeitungseigenschaften als auch die gewünschten Kondensatoreigenschaften zu erzielen.

Aufgabe der Erfindung ist es, die Möglichkeiten der einzugehenden Kompromisse zu erweitern, d.h. ein Pulver für die Kondensatorherstellung bereitzustellen, das es erlaubt, Kondensatoren mit einer größeren Eigenschaftsbreite herzustellen bzw. Kondensatoren mit bestimmten Eigenschaften mit weniger stringenten Verfahrensbeschränkungen herzustellen.

Weitere Aufgaben der Erfindung sind ohne weiteres aus der folgenden Beschreibung der Erfindung ableitbar.

Es wurde gefunden, dass dies gelingt, wenn auf Sinterschutzdotierungen vollständig verzichtet wird.

Gegenstand der Erfindung sind dem gemäß Tantalpulver gemäß Anspruch 1.

Erfindungsgemäße Tantalpulver weisen einen Gehalt an für ihre Sinterschutzwirkung bekannten Substanzen von

P < 40 ppm,

N < 400 ppm,

B < 10 ppm,

Si < 20 ppm,

S < 10 ppm und

As < 10 ppm auf.

Besonders bevorzugt soll der Phosphorgehalt unterhalb von 10 ppm, der Stickstoffgehalt unterhalb von 200 ppm liegen. Insbesondere bevorzugt sind Tantalpulver mit einem Stickstoffgehalt von unterhalb 100 ppm.

Ob ein Gehalt an Fremdsubstanzen in den Tantalpulvern als Sinterschutzmitteln wirksam ist, hängt sowohl von deren Menge als von der Art, in der diese in den Pulvern vorhanden sind, ab. So kann ein oberflächlicher Gehalt an Stickstoff von 400 ppm noch als Sinterschutzmittel wirksam sein, während eine gleichmäßige Dotierung über das Volumen der Pulverteilchen in der Regel unwirksam ist.

Besonders bevorzugt zeichnen sich die erfindungsgemäßen Pulver durch die Freiheit von als Sinterschutzmittel wirksamen Dotierelementen außer in Mengen unvermeidbarer Verunreinigungen aus.

Als überraschend wird angesehen, dass die erfindungsgemäßen Tantalpulver zu Kondensatoren mit sehr geringem Reststrom verarbeitbar sind, da die Sinterschutzdotierung nach der Lehre des Standes der Technik regelmäßig auch zur Verringerungen des Reststromes eingesetzt wurde.

Erfindungsgemäße Tantalpulver weisen nach Pressen in eine zylindrische Form mit dem Durchmesser 5,1 mm und der Länge 5,1 mm bei einer Pressdichte von 5,0 g/cm$^3$ eine Pressfestigkeit nach Chatillon von oberhalb 4 kg, vorzugsweise oberhalb 5 kg auf.

Gegenstand der Erfindung sind ferner Festelektrolytkondensatoren mit einer erfindungsgemäßen Anode, die eine spezifische Kapazität von 40.000 bis 150.000 μFV/g, vorzugsweise 70.000 bis 150.000 μFV/g aufweisen.

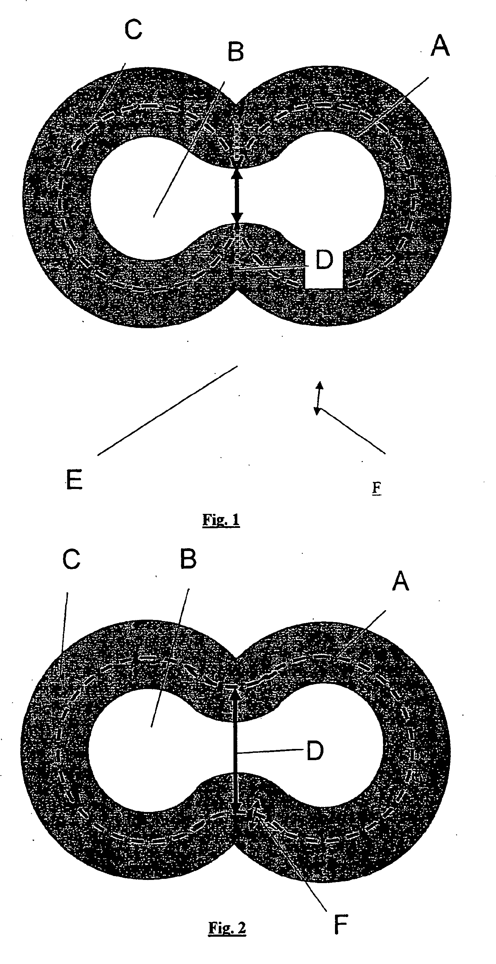

Eine Vorstellung für den der Erfindung zugrunde liegenden Effekt wird anhand der Fig. 1 und 2 schematisch verdeutlicht: In den Fig. bezeichnet A die Querschnittskontur (strichlierte Linie) zweier versinterter Primärteilchen mit der Sinterbrücke D. Im Falle der Agglomeration in Gegenwart von Sinterschutzdotierungen mit Phosphor oder Stickstoff (Fig. 1) weist die Sinterbrücke eine relativ starke Einkerbung auf, während im Falle der (erfindungsgemäßen) Agglomeration ohne Sinterschutzdotierung (Fig. 2) die Sinterbrückenkerbe "verlaufen" ist. In der schematischen Darstellung der Figuren ist die durch die Sinterbrücke gebildete, durch die Doppelpfeile D repräsentierte Kontaktfläche der Primärteilchen in Fig..2 etwa 3-fach so groß wie in Fig. 1. Der grau dargestellte Bereich deutet die Pentoxidschicht nach der Anodisierung an, die zu etwa 1/3 ihrer Dicke senkrecht zur Oberfläche (strichlierte Linie) in die ursprüngliche Metallstruktur hineingewachsen und zu etwa 2/3 aus dieser herausgewachsen ist.

Aus den erfindungsgemäßen Pulvern hergestellte Anoden weisen außerordentlich geringe spezifische Restströme und eine hervorragende Spannungsdurchschlagsfestigkeit auf. Der Grund hierfür ist eventuell ebenfalls aus den Fig.1 und 2 erklärbar. Während bei dem mit Sinterschutzdotierung gesinterten Anoden (Fig.1) während des Wachstums der Pentoxidschicht an der Kerblinie der Sinterbrücke zwischen den beiden Primärteilchen eine "Naht" gebildet wird, an der die Wachstumsgrenzen der beiden Teilchen zusammenwachsen, ist dies bei dem erfmdungsgemäßen Pulver (Fig. 2) nicht der Fall. Eine derartige "Wachstumsnaht" ist aber eine Anreicherungsstelle für Verunreinigungen und Stapelfehler im atomaren Bereich und damit die Basis für Leck- bzw. Restströme bzw. Überspannungsdurchschläge.

## Beispiele

Es wird ein feinteiliges, teilversintertes Ausgangs-Tantalpentoxid mit einer mittleren Primärteilchengröße von ca. 2,5 μm (visuell bestimmt aus REM-Aufnahmen), einer nach ASTM B 822 (Gerät Malvern MasterSizer Sμ) bestimmten Teilchengrößenverteilung entsprechend einem D10-Wert von 5,7 μm, einem D50-Wert von 28,3 μm und einem D90-Wert von 72,1 μm und einer nach ASTM D 3663 bestimmten spezifischen Oberfläche (BET) von 0,54 m$^2$/g eingesetzt.

Das Ausgangs-Tantalpentoxid wurde in an sich bekannter Weise durch Umsetzung einer Tantalfluorsäure mit Ammoniaklösung, Abtrennen, Waschen und Trocknen des gefällten Tantalhydroxids, Glühen des Hydroxids in Luft und Absieben des Produktes auf kleiner 600 μm und einer anschließenden Stabilisierungsglühung unter Argon bei 1700°C über 4 Stunden sowie Zerkleinern und Sieben hergestellt.

Das Ausgangs-Tantalpentoxid wird auf einem Geflecht aus Tantaldraht in einen mit Tantalblech ausgekleideten Ofen oberhalb eines Tiegels, der die 1,1-fach stöchiometrische Menge (bezogen auf den Sauerstoffgehalt des Pentoxides) an Magnesium enthält, gegeben. Der Ofen weist eine Heizung und unterhalb des Magnesium enthaltenden Tiegels eine Gaseinlassöffnung sowie oberhalb der Tantalpentoxidschüttung eine Gasabzugsöffnung auf. Vor Beginn des Aufheizens auf die Reduktionstemperatur wird der Ofen mit Argon gespült. Während der Reduktion strömt langsam Argon unter Normaldruck durch den Ofen. Nach Beendigung der Reaktion und Abkühlen des Ofen wird allmählich Sauerstoff in den Ofen gegeben, um das Metallpulver gegen Abbrand zu passivieren. Das gebildete Magnesiumoxid wird durch Waschen mit Schwefelsäure und anschließend entmineralisiertem Wasser bis zur Neutralität entfernt.

Das Pulver weist nach der Reduktion eine aus REM-Aufnahmen bestimmte mittlere Primärteilchengröße von ca. 0,2 μm, eine spezifische Oberfläche nach BET von 2,3 m$^2$/g und eine nach ASTM B 822 bestimmte Teilchengrößenverteilung entsprechend D10 von 16,3 $\mu$m, D50 von 31,7 $\mu$m und D90 von 93,2 $\mu$m auf.

Ein Teil des Pulvers wird durch Tränken mit Phosphorsäurelösung und Trocknen mit 150 ppm Phosphor dotiert.

Danach werden sowohl Phosphor-dotierte als auch nicht dotierte Proben des Tantalpulvers zunächst durch Zugabe der 1,5-fach stöchiometrischen Menge Magnesiumspäne und Erhitzen über zwei Stunden auf die in Tabelle 1 angegebene Desoxidationstemperatur desoxidiert und nach dem Abkühlen durch ein Sieb der Maschenweite 300 $\mu$m gerieben.

In Tabelle 1 sind folgende Pulvereigenschaften bzw. Parameter angegeben:

Desox.-T. bezeichnet die Temperatur, bei die Desoxidation durchgeführt wurde.

Die "Schüttdichte" wurde mit einem Scott-Volumeter nach ASTM B 329 bestimmt.

"FSSS" bezeichnet den mittels Fisher Sub Sieve Sizer nach ASTM B 330 bestimmten mittleren Korndurchmesser.

Die Pressfestigkeit wurde an einem Pulverpressling von 5,1 mm Länge und 5,1 mm Durchmesser mit einer Pressdichte von 5,0 g/cm$^3$ mit einem Chatillon-Kraftmesser bestimmt.

"BET" bezeichnet die nach dem bekannten Verfahren nach Brunauer, Emmet und Teller bestimmte spezifische Oberfläche.

Die "Fließfähigkeit" ("Hall-flow") gibt die Durchflusszeit in Sekunons von 25 g Pulver durch einen 1/10"-Trichter nach ASTM B 213 an.

"Mastersizer D10, D50 und D90" bezeichnen die nach ASTM B 822 mit dem Gerät MasterSizer S$\mu$ der Firma Malvern durch Laserbeugung bestimmten 10-, 50- und 90- Massenperzentile der Korngrößenverteilung des Pulvers einmal ohne und einmal mit Ultaschallbehandlung an.

Aus den Pulvern werden Presskörper der Abmessung 3 mm Durchmesser und 3,96 mm Länge mit einer Pressdichte von 5,0 g/cm$^3$ hergestellt, wobei in die Pressmatrize vor dem Einfüllen der Pulver axial ein Tantaldraht von 0,2 mm Durchmesser als Kontaktdraht eingelegt wurde. Die Presskörper werden bei der in der Tabelle angegebenen Sintertemperatur über 10 Minuten im Hochvakuum zu Anoden versintert.

Die "Drahtzugfestigkeit" wurde wie folgt bestimmt: Der Anodendraht wird durch die Öffnung von 0,25 mm Durchmesser eines Haltebleches gesteckt und das freie Ende in die Halteklemme eines Chatillon-Kraftmessers eingespannt. Dann wird bis zur Herauslösung des Drahtes aus der Anodenstruktur belastet.

Die Anodenkörper werden in 0,1-%ige Phosphorsäure eingetaucht und bei einer auf 150 mA begrenzten Stromstärke bis zu einer Formierspannung von 30 V formiert. Nach Abfallen der Stromstärke wird die Spannung noch eine Stunde aufrechterhalten. Zur Messung der Kondensatoreigenschaften wird eine Kathode aus 18%iger Schwefelsäure eingesetzt. Es wurde mit einer Wechselspannung von 120 Hz gemessen.

Spezifische Kapazität und Reststrom sind in Tabelle 1 angegeben.

Ferner wurde die "Durchschlagfestigkeit wie folgt bestimmt: Die Anodenkörper werden in 0,1-%ige Phosphorsäure eingetaucht und bei konstanter Stromstärke formiert, bis ein plötzlicher Spannungsabfall stattfindet.

**Tabelle 1**

| Beisp. Nr. | | 1 | 2 | 3 | 4 | 5 | 6 | 7 | 8 | 9 | 10 |
|---|---|---|---|---|---|---|---|---|---|---|---|
| Pulvereigenschaften: | | | | | | | | | | | |
| P-Dotierung | | - | - | - | - | - | - | ja | ja | ja | ja |
| Desox.-T. | °C | 800 | 825 | 850 | 875 | 900 | 950 | 850 | 875 | 900 | 950 |
| Schüttdichte | g/inch$^3$ | 26,7 | 27,4 | 27,5 | 27,8 | 27,6 | 28,8 | 28,4 | 28,3 | 27,5 | 28,8 |
| FSSS | μm | 2,20 | 2,08 | 2,14 | 2,17 | 2,21 | 2,45 | 1,89 | 2,07 | 2,11 | 2,36 |
| Pressfestigkeit | kg | 4,1 | 4,3 | 4,3 | 4,6 | 4,3 | 5,8 | 2,7 | 3,4 | 3,6 | 5,3 |
| BET | m$^2$/g | 2,13 | 1,84 | 1,67 | 1,46 | 1,42 | 1,29 | 2,08 | 1,79 | 1,61 | 1,43 |
| Fließfähigkeit | s | 20,0 | 21,0 | 21,0 | 22,5 | 20,0 | 21,0 | 21,0 | 23,0 | 21,0 | 22,0 |
| Mastersizer ohne Ultraschall | D10 | 18,7 | 17,9 | 18,1 | 17,7 | 18,0 | 18,1 | 17,0 | 17,2 | 17,4 | 17,9 |
| | D50 | 32,3 | 33,1 | 33,2 | 33,0 | 33,1 | 32,9 | 31,3 | 32,3 | 32,2 | 33,0 |
| μm | D90 | 187 | 148 | 192 | 165 | 171 | 179 | 56,8 | 68,2 | 67,7 | 125 |
| Mastersizer mit Ultraschall | D10 | 2,1 | 3,1 | 3,6 | 5,9 | 12,8 | 13,8 | 1,2 | 1,8 | 5,04 | 10,6 |
| | D50 | 25,3 | 26,0 | 26,1 | 26,6 | 29,2 | 28,6 | 23,1 | 24,4 | 26,1 | 28,0 |
| μm | D90 | 36,2 | 39,5 | 40,7 | 45,3 | 50,16 | 48,2 | 41,1 | 42,2 | 45,1 | 47,5 |
| Chemische Analyse | C | 24 | 26 | 23 | 23 | 25 | 28 | 24 | 21 | 25 | 29 |
| | H | 169 | 181 | 178 | 142 | 104 | 71 | 222 | 192 | 149 | 88 |
| ppm | Mg | 21 | 19 | 18 | 23 | 22 | 35 | 20 | 18 | 18 | 40 |
| | N | 231 | 258 | 224 | 228 | 243 | 296 | 287 | 270 | 299 | 350 |
| | O | 6247 | 5861 | 5421 | 4779 | 4709 | 3809 | 5997 | 5486 | 5009 | 4301 |
| | P | 9 | 9 | 9 | 9 | 9 | 9 | 155 | 155 | 155 | 150 |
| | Na | <0,5 | <0,5 | <0,5 | <0,5 | <0,5 | <0,5 | <0,5 | <0,5 | <0,5 | <0,5 |
| | K | <0,5 | <0,5 | <0,5 | <0,5 | <0,5 | <0,5 | <0,5 | <0,5 | <0,5 | <0,5 |
| | Fe | 16 | 17 | 14 | 18 | 16 | 18 | 21 | 20 | 15 | 16 |
| | Cr | 4 | 7 | 5 | 5 | 4 | 4 | 5 | 5 | 4 | 3 |
| | Ni | <3 | <3 | <3 | <3 | <3 | <3 | <3 | <3 | <3 | <3 |

(fortgesetzt)

| Anode: | | | | | | | | | | | |
|---|---|---|---|---|---|---|---|---|---|---|---|
| Sintertemp. | °C | 1310 | 1310 | 1310 | 1310 | 1310 | 1310 | 1410 | 1410 | 1410 | 1410 |
| Draht-Zugfestigkeit | kg | 35,9 | 33,6 | 30,6 | 24,4 | 22,8 | 17,9 | 30,5 | 31,7 | 24,0 | 30,1 |
| Kondensator: elektrische Eigenschaften: | | | | | | | | | | | |
| Spez. Kapazität | µFV/g | 95431 | 87989 | 85508 | 84753 | 83355 | 77775 | 87593 | 87690 | 87187 | 78110 |
| Spez. Reststrom | nA/µFV | 0,64 | 0,62 | 0,55 | 0,50 | 0,58 | 0,47 | 0,65 | 0,76 | 0,57 | 1,58 |
| Durchschlagfestigkeit | V | >300 | >300 | >300 | >300 | . >300 | >300 | 279 | 284 | 265 | 253 |

**Patentansprüche**

1. Tantalpulver für die Kondensatorherstellüng bestehend aus agglomerierten Primärteilchen mit einer mittleren Primärteilchenabmessung von 0,2 bis 0,8 $\mu$m, einer spezifischen Oberfläche von 0,9 bis 2,5 m$^2$/g und einer nach ASTM B 822 bestimmten Teilchengrößenverteilung entsprechend einem D10-Wert von 5 bis 25 $\mu$m, einem D50-Wert von 20 bis 140 $\mu$m und einem D90-Wert von 40 bis 250 $\mu$m,
P < 30 ppm
N < 400 ppm
B < 10 ppm
Si < 20 ppm
S < 10 ppm
As < 10 ppm.

2. Pulver nach Anspruch 1 mit einem Gehalt an
P < 10 ppm
N < 300 ppm,

3. Pulver nach Anspruch 2 mit einem Gebalt an
N < 100 ppm.

4. Festelektrolytkondensatoranode erhältlich aus dem Tantalpulver gemäß einem der Ansprüche 1 - 3.

5. Festelektrolytkondensatoranode nach Anspruch 4, mit einer Drahtabzugsfestigkeit von mehr als 30 kg.

6. Festelektrolytkondensator mit einer Anode nach einem der Anspruche 4 oder 5 mit einer spezifischen Kapazität von 70.000 bis 150.000 $\mu$FV/g und einem spezifischen Reststrom von weniger als 1 nA/$\mu$FV.

**Claims**

1. Tantalum powder for capacitor production, consisting of agglomerated primary particles with a mean primary particle dimension of 0.2 to 0.8 $\mu$m, a specific surface area of 0.9 to 2.5 m$^2$/g and a particle size distribution determined to ASTM B 822 corresponding to a D10 of 5 to 25 $\mu$m, a D50 of 20 to 140 $\mu$m and a D90 of 40 to 250 $\mu$m, with a content of
P < 30 ppm
N < 400 ppm
B < 10 ppm
Si < 20 ppm
S < 10 ppm
As < 10 ppm.

2. Powder according to Claim 1 with a content of
P < 10 ppm
N < 300 ppm.

3. Powder according to Claim 2 with a content of
N < 100 ppm.

4. Solid electrolytic capacitor anode obtainable from the tantalum powder according to any of Claims 1 to 3.

5. Solid electrolytic capacitor anode according to Claim 4 having a wire pull-out resistance of more than 30 kg.

6. Solid electrolytic capacitor with an anode according to either of Claims 4 and 5 with a specific capacitance of 70 000 to 150 000 $\mu$FV/g and a specific residual current of less than 1 nA/$\mu$FV.

**Revendications**

1. Poudre de tantale pour la fabrication de condensateurs, constituée par des particules primaires agglomérées présentant une dimension moyenne des particules primaires de 0,2 à 0,8 $\mu$m, une surface spécifique de 0,9 à 2,5 m$^2$/g et une répartition granulométrique déterminée selon la norme ASTM B 822 correspondant à une valeur $D_{10}$ de 5 à 25 $\mu$m, une valeur $D_{50}$ de 20 à 140 $\mu$m et une valeur $D_{90}$ de 40 à 250 $\mu$m, présentant une teneur en
P < 30 ppm
N < 400 ppm
B < 10 ppm
Si < 20 ppm
S < 10 ppm
As < 10 ppm.

2. Poudre selon la revendication 1, présentant une teneur en
P < 10 ppm
N < 300 ppm.

3. Poudre selon la revendication 2, présentant une teneur en
N < 100 ppm.

4. Anode de condensateur électrolytique solide, pouvant être obtenue à partir de la poudre de tantale selon l'une quelconque des revendications 1-3.

5. Anode de condensateur électrolytique solide selon la revendication 4, présentant une résistance à la traction sur le fil supérieure à 30 kg.

6. Condensateur électrolytique solide présentant une anode selon l'une quelconque des revendications 4 ou 5 présentant une capacité spécifique de 70 000 à 150 000 $\mu$FV/g et un courant résiduel spécifique inférieur à 1 nA/$\mu$FV.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5986877 A